# FASCICULE DE BREVET EUROPEEN

(11) **EP 1 706 283 B1**
(45) Date de publication et mention de la délivrance du brevet: **11.03.2009**
(21) Numéro de dépôt: 05717458.3
(22) Date de dépôt: 20.01.2005
(51) Int. Cl.: B60J 5/12, B60J 7/14

(54) **VEHICULE A TOIT DECOUVRABLE ET HAYON ARRIERE**
EIN SONNENDACH UND EINE LUKE UMFASSENDES FAHRZEUG
VEHICLE COMPRISING A SUNROOF AND A HATCH

(30) Priorité: 21.01.2004 FR 0400566
(43) Date de publication de la demande: 04.10.2006
(73) Titulaire: Société Européenne de Brevets Automobiles, 75011 Paris 11 (FR)
(72) Inventeur: QUEVEAU, Gérard, F-79140 Le Pin (FR); QUEVEAU, Paul, F-79140 Montravers (FR); GUILLEZ, Jean-Marc, F-79140 Ciriéres (FR)
(74) Mandataire: Pichat, Thierry
(86) Numéro de dépôt international: PCT/FR2005/000129
(87) Numéro de publication internationale: WO 2005/080107

(56) Documents cités:
- EP-A- 1 134 104
- EP-A- 1 375 223
- WO-A-01/14158
- DE-A- 19 738 281
- FR-A- 2 782 974
- GB-A- 2 264 533
- US-A1- 2002 121 798
- US-B1- 6 386 613

## Description

L'invention concerne un véhicule découvrable à toit ouvrant comprenant plusieurs panneaux de toit mobiles les uns par rapport aux autres et par rapport à la structure du véhicule entre une position de fermeture dans laquelle les panneaux s'étendent au dessus de l'habitacle (qu'ils ferment en partie supérieure), et une position ouverte atteinte par basculement de ces panneaux de toit vers l'arrière du véhicule, position dans laquelle lesdits panneaux découvrent l'habitacle.

WO 01/14158 en présente un exemple.

L'invention à pour objet d'appliquer le principe du toit ouvrant à des véhicules de type monospace, break ou véhicule tout-terrain, en utilisant un tel toit basculant et en pouvant si nécessaire ouvrir ce toit jusqu'au coffre arrière du véhicule, avec alors éventuellement un espace ouvert jusqu'à la base des vitres latérales, ceci en liaison avec une possibilité de chargement/déchargement du coffre à partir d'un large accès, en évitant en outre que l'ouverture du moyen d'accès au coffre arrière nécessite un espace important derrière le véhicule lorsqu'on ouvre ou ferme ce moyen d'accès qui est typiquement pivotant par rapport à la structure du véhicule.

Dans ce contexte, une solution est proposée en particulier en revendication 1.

Par soucis de fiabilité, efficacité, simplicité de fonctionnement, on conseille en outre que le hayon soit monté glissant sur le véhicule par l'intermédiaire de bras pivotants s'étendant jusqu'à l'écart des panneaux de hayon, pour s'articuler vis-à-vis de la structure du véhicule et créer au moins une charnière décalée à l'écart du plan général dans lequel s'étendent lesdits panneaux. Les autres revendications jointes, dont le contenu est intégré à la présente description, par référence, permettent successivement et en outre :
- d'atteindre, avec un tel véhicule à hayon arrière, une possibilité d'ouverture maximale de l'habitacle sur l'extérieur,
- de prendre en compte dans la manière jugée la plus opérationnelle pour assurer les différentes manoeuvres possibles du hayon arrière avec des bras d'articulation/pivotants,
- de permettre aux occupants du véhicule d'être plus ou moins en contact avec l'extérieur à l'endroit du toit ouvrant, et d'offrir donc la possibilité d'un véhicule plus ou moins découvrable,
- de prendre en compte l'encombrement des moyens de manoeuvre du hayon à l'intérieur du coffre (et plus généralement à l'intérieur du véhicule),
- de pouvoir limiter les actionneurs devant être utilisés pour faire glisser ce hayon entre ses positions ouverte et fermée, y compris dans la mesure où il inclus des parties supérieure et inférieure mobiles l'une par rapport à l'autre,
- d'atteindre encore une ouverture considérée comme maximale de l'espace découvrable du véhicule, en liaison avec le hayon arrière prévu.

Ce qui suit fait référence aux dessins annexés donnés à titre d'exemples non limitatifs et dans lesquels:
Les figures 1, 2, 3, 4 et 5 montrent schématiquement, en coupe longitudinale un mode de réalisation d'une partie de véhicule conforme à l'invention, avec un hayon arrière et un toit ouvrant dans différents états d'ouverture/fermeture,
La figure 6 montre localement l'intérieur du coffre,
La figure 7 montre une variante de réalisation d'une partie supérieure du hayon.

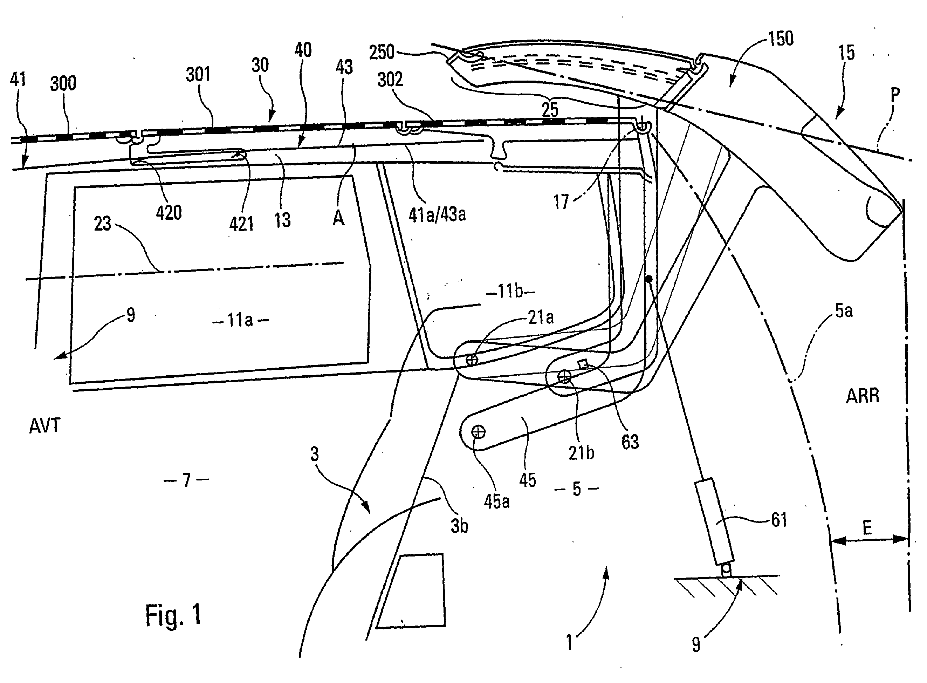

Figure 1, on voit une partie arrière de véhicule 1 comprenant une banquette (ou rangée de sièges arrière) 3 située juste devant une zone de coffre arrière 5 et constituant en quelque sorte la limite entre ce coffre arrière (en situation normale d'utilisation des sièges, et l'habitacle 7. Une cloison peut être interposée.

Les côtés respectivement avant et arrière sont repérés AVT et ARR.

On notera en repère général 9, la carrosserie ou structure générale du véhicule, en 11a et 11b les vitres latérales arrière et en 13 la partie supérieure sensiblement horizontale du véhicule au niveau de son toit.

Il s'agit ici d'une voiture de type tout terrain "cinq portes" dont l'ouverture 5a d'accès au coffre 5 peut être sélectivement fermée par un hayon basculant 15.

Figures 1 à 5, le hayon 15 n'est pas articulé de "manière traditionnelle" vis-à-vis de la structure 9 du véhicule, c'est-à-dire qu'il n'est pas prévu pour tourner dans son ensemble autour d'un axe a priori fixe situé en 17 au sommet de la zone d'ouverture 5a et s'étendant horizontalement sensiblement à l'intersection du toit 13 et de la partie horizontale de l'encadrement de cette ouverture 5a, comme par exemple dans JP-A-2003 3127667 ou FR-A-2 783 761.

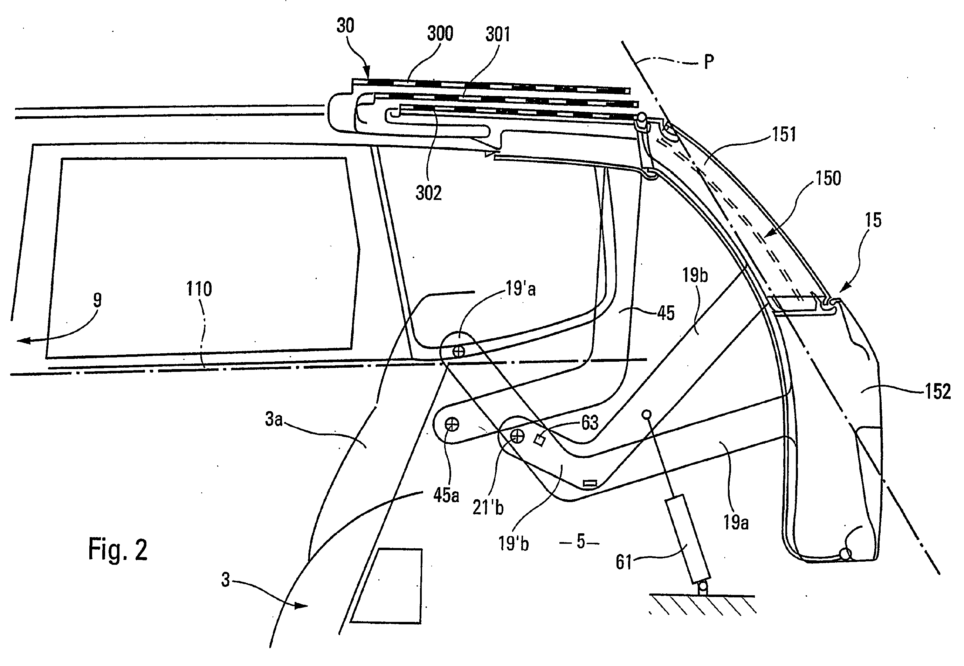

Ce principe de pivotement traditionnel d'un hayon de coffre est ici remplacé par un hayon glissant, ici basculant au bout de bras 19a, 19b fixés à distance (nettement à l'écart) de l'axe virtuel 17, de manière que dans son état fermé de la figure 2 le hayon 15 obture entièrement l'accès au coffre 5, tandis que dans sa position ouverte de la figure 1, il libère l'accès 5a, après articulation en rotation des bras 19a, 19b autour de l'axe horizontal 21a, de telle manière que toute la partie supérieure 25 du hayon 15 est basculée vers l'avant du véhicule, au dessus de la zone de bord de toit 13.

On notera que le bras 19a porte l'axe 21b du bras 19b (plus court) qui peut ainsi pivoter par rapport à lui.

Ainsi, pendant l'ouverture du hayon, le bandeau supérieur horizontal 250 du panneau de fermeture 150 s'écarte de la zone de l'axe virtuel horizontal 17.

On appelle ici "hayon" l'ensemble comprenant un panneau de hayon 150 constitué par toute l'ossature du hayon qui encadre une partie supérieure vitrée 151 et qui forme un large bandeau inférieur plein 152 (à la manière des panneaux traditionnel de hayon par exemple pour break), ce panneau 150 étant relié (a priori fixement) aux bras d'articulation 19a, 19b lesquels s'étendent transversalement au plan général P du panneau(voir figure 1 et 2).

Figures 1 à 5, la partie supérieure 151 vitrée et la partie inférieure pleine 152 constituent deux parties de panneau de hayon mobiles l'une par rapport à l'autre.

Aussi, pour la manoeuvre du panneau de hayon 150, a-t-on ici prévu deux groupes de bras distincts, 19a et 19b. Mais on pourrait ne prévoir qu'un seul groupe de bras, si le panneau de hayon 150 était monobloc, comme par exemple le seul groupe de bras 19a ou 19b fixé respectivement sensiblement au milieu (19a) ou à proximité de l'extrémité inférieure (19b) du panneau 150.

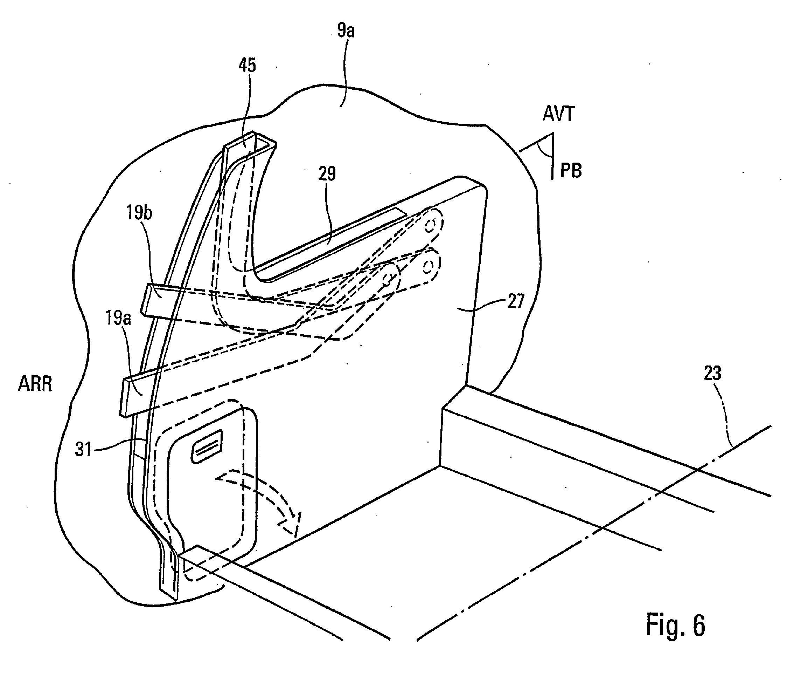

On parle ici d'un "groupe de bras" dans la mesure où l'on considère que chaque bras (tel que 19a ou 19b) est en fait un bras double : un bras de chaque côté latéral du véhicule s'étendant et basculant le long des parties intérieures de carrosserie respectivement gauche et droite du véhicule, près des passages de roues arrière, à l'image de ce que l'on devine sur la figure 6 où, par exemple, le bras gauche 19a s'étend à proximité immédiate de la partie arrière gauche 9a de la carrosserie. Une symétrie existe par rapport à l'axe longitudinal médian 23 du véhicule.

Les bras 19a, 19b sont coudés', avec une convexité orienté vers le bas et s'étendent sensiblement perpendiculairement au plan P, c'est-à-dire parallèlement à l'axe longitudinal 23.

De préférence, ces bras s'étendent en outre (côté gauche ou côté droit du véhicule) chacun dans un plan parallèle à l'axe 23, et ce de façon rapprochée comme on peut le voir sur la figure 6, de manière que d'un même côté les différents bras puissent être camouflés ensemble à l'intérieur d'un cache de protection 27 étroit par exemple plaqué à l'intérieur du coffre, latéralement à proximité immédiate des passages de roues arrière.

Pour le passage des bras, le cache 27 présente au dessus ou à l'arrière une ou plusieurs fentes, telles que 29, 31.

Pour l'articulation du panneau de hayon 150, les bras 19a, 19b s'étendent nettement à l'intérieur du véhicule, à l'écart de sa carrosserie 9 et sont ainsi articulés à leur extrémité libre (respectivement 19'a, 19'b) à l'intérieur du coffre 5, et préférentiellement à proximité de l'arrière du dossier 3a du siège arrière 3, c'est-à-dire vers l'avant du coffre. En d'autres termes, les bras d'articulation du panneau de hayon 150 ont un longueur a priori supérieure à une vingtaine de centimètres et de préférence supérieure à 30 voire 40 centimètres.

En hauteur, leur fixation est plutôt sur la partie haute du dossier 3a, c'est-à-dire à proximité de la limite inférieure 110 des vitres latérales arrière 11a, 11b (figure 2).

Les axes 21a, 21b d'articulation des bras 19a, 19b sont perpendiculaires à l'axe longitudinal 23.

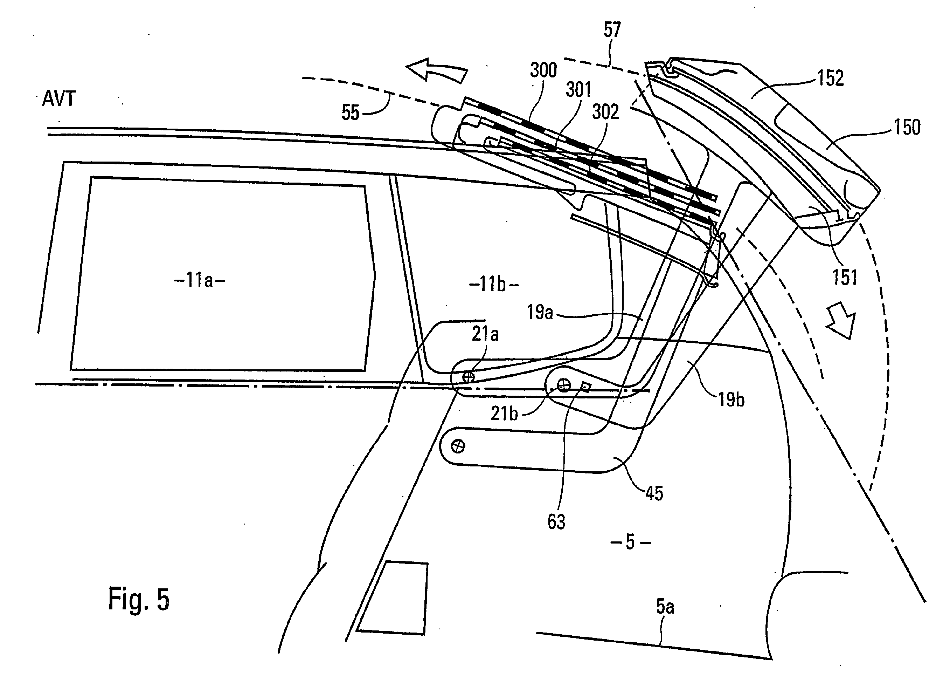

Le panneau de hayon 150 peut donc pivoter entre une position fermée (figure 2) où le panneau est sensiblement vertical (plan P légèrement incliné par rapport à la verticale) et une position ouverte comme sur la figure 1 où le plan P est sensiblement horizontal, c'est-à-dire sensiblement parallèle au plan général du toit 13 et situé globalement au dessus de lui, dégageant ainsi un large accès au coffre 5, avec un encombrement axial minimal E dans le sens de la profondeur (axe 23), compte tenu de ce que toute la partie 25 du panneau 150 a basculé par dessus le toit, vers l'avant du véhicule. Pour des raisons de chargement/déchargement, ainsi que d'encombrement, on peut prévoir que la partie supérieure 151 du panneau de hayon 150 s'escamote dans la partie inférieure 152 (voir figure 5), ou du moins puisse être déplacée sensiblement au même niveau.

Pour cela, le volume intérieur de la partie extérieurement pleine 152 (élément de carrosserie) est adapté pour recevoir sensiblement dans la direction du plan P la partie supérieure 151.

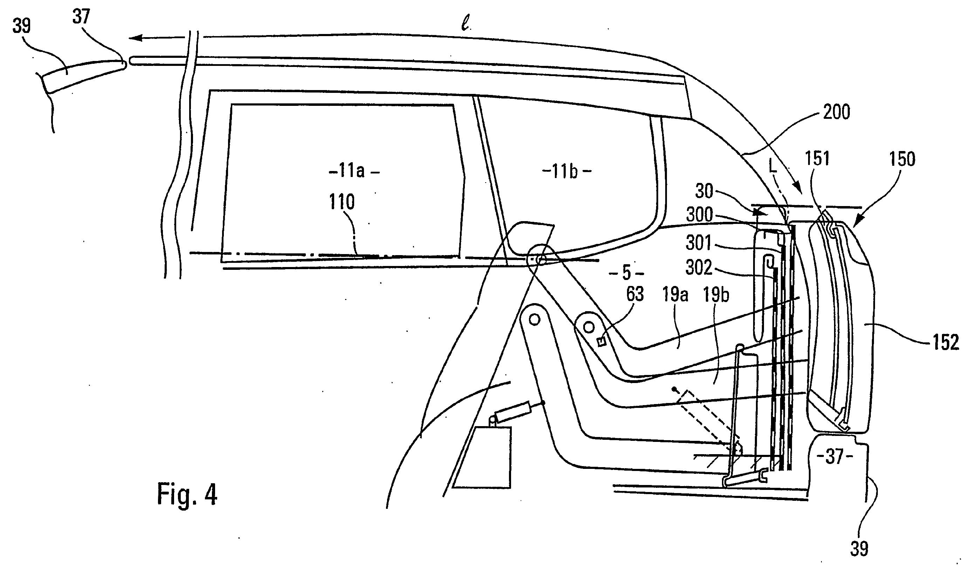

Dans la version imaginée, la hauteur (sensiblement dans la direction du plan P) de la partie inférieure 152 de hayon est comparable à celle de la partie supérieure 151 qui peut ainsi pratiquement entièrement s'escamoter dans la partie 152 comme on peut le voir notamment sur la figure 4. Ainsi, avec le toit ouvrant 30 et ses panneaux 300, 301, 302 superposables de manière télescopique, la limite haute du toit ouvrant 30 en position escamotée, sensiblement verticale, basculée à l'arrière du coffre 5, (comme sur la figure 4) peut arriver sensiblement de niveau avec l'extrémité supérieure du panneau de hayon 150 (avec sa partie supérieure 151 ramenée au niveau de la partie inférieure 152), le panneau 150 étant alors supposé en position fermée, avec sa base en appui sur le bas de caisse transversale 37 de coffre qui borde le bouclier arrière 39.

On libère alors tout un espace au dessus de la limite L, c'est-à-dire qu'au dessus de leur tête, et à l'arrière jusqu'au coffre, les occupants du véhicule sont directement à l'air libre comme le montre la figure 4, cette situation étant d'autant plus renforcée si la limite L est, en hauteur, proche de la limite inférieure 110 des vitres latérales 11a, 11b, (figure 4).

Concernant le toit ouvrant 30, il comprend au moins un élément (ou panneau) de toit avant et au moins un élément (ou panneau) de toit arrière

En l'espèce, l'élément de toit avant est en deux parties: un panneau avant 300 et un panneau intermédiaire 301.

En position fermée du toit ouvrant 30 au-dessus de l'habitacle 7 (comme sur la figure 1), le panneau avant 300 s'étend longitudinalement entre le sommet 37 du pare-brise 39 et, à l'arrière, le panneau intermédiaire 301 lequel s'étend devant le panneau arrière de toit 302 appartenant à un premier groupe de panneaux.

Ces panneaux mobiles 300, 301, 302 s'étendent, dans l'état fermé du toit de la figure 1, sensiblement horizontalement de façon co-planaire pour fermer le dessus de l'habitacle au-dessus de la zone 13 de toit, laquelle consiste alors en deux travées latérales sensiblement parallèles à l'axe longitudinal 23 s'étendant sur la longueur de l'habitacle jusqu'au panneau de hayon arrière 15, au-dessus des vitres latérales.

Ces bandeaux structuraux longitudinaux, symétriques à gauche et à droite, portent des glissières de coulissement des panneaux 300, 301 parallèlement à l'axe 23, telles que les glissières 40 (gauche et droite) permettant le déplacement axial desdits panneaux jusqu'à ce qu'ils viennent se superposer comme sur la figure 2, avec de bas en haut, le panneau arrière 302 (qui ne s'est pas déplacé), le panneau intermédiaire 301 et le panneau avant 300.

Différents systèmes de coulissement de tels panneaux de toit ouvrant connus peuvent être utilisés, pour peu qu'ils permettent la superposition comme sur la figure 2 et que le panneau arrière de toit (302) soit lié (a priori fixement) à un bras basculant 45 articulé en rotation à son extrémité libre (en 45a), suivant un axe horizontal perpendiculaire à l'axe longitudinal 23 et situé à l'intérieur du véhicule.

En l'espèce, l'axe transversal 45a est situé près de l'arrière 3b du dossier de siège arrière 3, près du sommet de ce dossier (moitié supérieure) et donc à proximité des axes de rotation 21a, 21b.

Comme pour les bras 19a, 19b, chacun des bras 45 est situé latéralement (à gauche ou à droite) près des éléments latéraux correspondants de la carrosserie, en s'étendant à l'intérieur du coffre 5, de manière en particulier à pouvoir être logé dans le cache gauche ou droit (tel que 27).

Comme les autres bras, chaque bras 45 est de préférence coudé et s'étend dans un plan parallèle à l'axe longitudinal 23 (voir plan PB du bras 19a, par exemple).

Pour le coulissement des panneaux mobiles de toit ouvrant 300, 301, chaque glissière latérale 40 comprend deux éléments longitudinaux de glissière 41, 43 parallèles et s'étendant sensiblement horizontalement (en fonction de la courbure plus ou moins prononcée du toit).

Le panneau avant de toit 300 est monté coulissant dans le premier élément de glissière 41 (élément avant), par deux galets 47, 49 respectivement engageables dans deux courbures prononcées (respectivement avant et arrière) 410, 411 de la glissière avant 41, ceci en position fermée du toit ouvrant comme sur la figure 1.

Ce panneau de toit avant 300 est relié aux galets respectivement avant et arrière 47, 49 par un bras coudé 51 fixe vers le bord avant 300a du panneau de toit avant 300.

Le panneau intermédiaire de toit 301 coulisse dans le deuxième élément de glissière 43, par l'intermédiaire de deux galets 51, 53, respectivement engageables dans les deux zones courbées 420, 421, dirigées vers le bas, de l'élément de glissière 43, pour venir de niveau avec les éléments 300, 302 en position fermée des éléments de toit (idem pour 410/411 vis-à-vis de l'élément de toit 300).

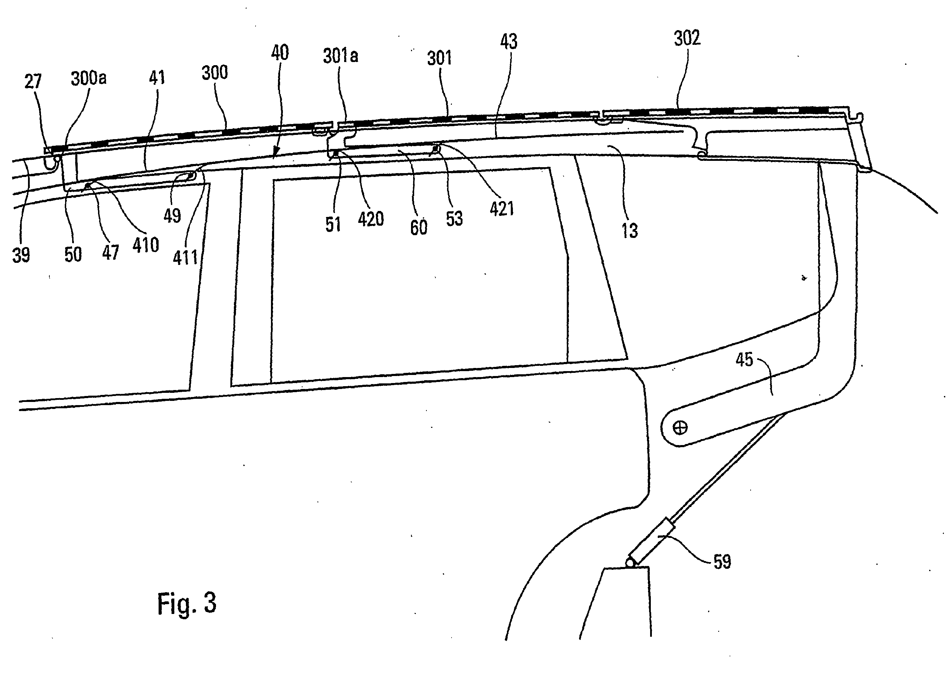

Ce panneau 301 est relié aux galets 51, 53 par un bras coudé 60 fixé vers le bord avant 301a du panneau 301 (voir figure 3).

L'élément de glissière 43 s'étend parallèlement à l'élément 41 et chacun d'eux comprend une partie fixe (avant) liée à l'un ou l'autre des bandeaux latéraux 13 de la structure du véhicule et une partie arrière (41a,43a) mobile s'étendant jusque sous le panneau 302 et qui pivote avec ce panneau de toit, via les bras 45.

Figure 1, on a repéré A la limite des parties mobiles 41a,43a, longitudinalement, parties que l'on voit confondues sur la figure (vue de côté).

Quant au panneau arrière 302 de toit ouvrant, il pivote par rapport à la structure du véhicule par l'intermédiaire des bras 45 et entraîne, verrouillés alors à lui, les panneaux 300,301.

Pour s'ouvrir ou se fermer entre les états des figures 1 et 2, les panneaux de toit ouvrant 300 et 301 coulissent le long de leurs éléments de glissières respectifs 41 et 43.

Parvenu dans la position de la figure 2 avec les éléments de toit 300, 301, 302 superposés et disposés à l'arrière de l'habitacle, sensiblement au dessus du coffre arrière 5, ces éléments (alors verrouillés ensemble par un verrou débrayable non représenté) peuvent pivoter ensemble par l'intermédiaire du bras 45, comme le montre la figure 5, la conformation de cet ensemble, du panneau de hayon 150 et des bras 19a, 19b 45 étant adaptée pour que l'ensemble de toit 300, 301, 302 pivote par rapport à la structure du véhicule entre sa position sensiblement horizontale haute de la figure 2 et une position escamotée sensiblement verticale, comme sur la figure 4, où les éléments de toit 300, 301, 302 situés côte à côte sont disposés sensiblement verticalement à l'arrière du coffre 5.

Comme on le voit sur les figures 4 et 5, l'arc 55 de pivotement/déplacement des panneaux de toit 300, 301, 302 est, par rapport au véhicule, situé plus à l'intérieur que l'arc 57 de pivotement/déplacement du panneau de hayon 150, de sorte que par exemple en position verticale escamotée de la figure 4, les panneaux de toit côte à côte 300, 301, 302 sont interposés entre l'arrière du coffre 5 et le panneau de hayon 150, lui-même disposé sensiblement verticalement, avec donc sa partie supérieure 151 au niveau de la partie inférieure 152.

Si l'on souhaite dégager plus largement la zone d'accès au coffre 5 que sur la figure 4 où le coffre n'est accessible que par le haut (200), au-dessus du panneau 152 et des éléments de toit 300, 301, 302, on peut faire basculer vers le haut et vers l'avant du véhicule tant l'ensemble du panneau de hayon 150 que les panneaux de toit ouvrant 300, 301, 302, comme le montre la flèche sur la figure 5, par pivotement des bras 19a, 19b, 45. Le coffre 5 est alors accessible depuis sensiblement son plancher 5a jusque par exemple, en limite supérieure, la base des vitres latérales 11a, 11b, voire plus haut (figure 5).

Pour cette opération, on peut utiliser exclusivement et conjointement un premier vérin 59 relié à l'un au moins des bras 45 (figure 3) et un deuxième vérin 61 relié à l'un au moins des bras 19b.

Si le vérin unique (un par côté de préférence) pour la manoeuvre des bras 19a,19b est le vérin 61, alors on le relie à l'un des bras latéraux 19b, permettant ainsi son articulation autour soit de 21b (articulation de la partie supérieure de hayon 151) soit de 21a (articulation de l'ensemble du hayon 15).

Pour la manoeuvre commune des bras 19a, 19b et donc du panneau de hayon 150 dans un état donné (escamoté ou non) de ces parties supérieure 151 et inférieure 152, les bras 19a, 19b sont verrouillables par un dispositif de verrouillage libérable schématisé en 63 pour pivoter ensemble.

A cet égard, plusieurs positions angulaires peuvent être déterminées, pour un pivotement commun.

Sur la figure 5, les deux bras 19a, 19b pivotent ensemble (dispositif d'interverrouillage 63 activé dans une première position angulaire) et l'écart angulaire entre les deux bras est faible, (partie supérieure 151 escamotée dans la partie inférieure 152).

Par contre, pour passer de la position fermée de la figure 2 à la position ouverte de la figure 1, les parties supérieure et inférieure du panneau de hayon 150 ont là encore pivoté ensemble avec le dispositif d'interverrouillage 63 alors activé dans une seconde position angulaire des bras, en respectant un écart angulaire plus important que dans le cas précédent.

Dans tous les cas, on comprend que le déplacement peut être assuré donc par un système d'entraînement unique, commun, tel que le vérin 61.

Bien entendu, pour escamoter ou sortir la partie supérieure de hayon 151 vis-à-vis de sa partie inférieure 152, le dispositif d'interverrouillage 63 est désactivé, permettant la libre articulation relative des bras 19a et 19b et l'évolution entre les états des figures 4 et 5 et celui des figures 1 et 2.

Le dispositif de verrouillage débrayable 63 peut consister en un système mécanique ou par exemple électromécanique avec par exemple un verrou commandé électriquement par le conducteur.

Avec des parties supérieure et inférieure 151, 152 mobiles l'une par rapport à l'autre, on peut alors en quelque sorte considérer que la partie supérieure escamotable 151 du panneau de hayon arrière appartient au toit ouvrant 30 en ce qu'il prolonge les panneaux de toit 300, 301, 302, dans leur continuité, de sorte que le toit ouvrant (qui comprend alors le panneau 151) s'étend depuis l'avant du véhicule (dans l'exemple depuis la traverse de bais de pare-brise 37) jusqu'au panneau de hayon 152 qui, à la différence du panneau 151 (vitré), est plein puisqu'il s'agit d'un élément mobile de la carrosserie, à l'image de la partie basse des portes latérales dont le véhicule est bien entendu également pourvu.

Dans cette approche, on peut donc obtenir un véhicule à très grand toit découvrable pouvant évoluer entre la position extrême de toit et hayon fermés et la position "toit totalement ouvert" de la figure 4.

Suivant cette approche, on peut donc alors considérer que l'on a affaire à un véhicule découvrable à toit ouvrant comprenant plusieurs panneaux de toit 300, 301, 302, 151 mobiles les uns par rapport aux autres et par rapport à la structure 9 du véhicule entre une position de fermeture dans laquelle les panneaux 300, 301, 302 s'étendent au dessus de l'habitacle qu'ils ferment en partie supérieure, et une position ouverte atteinte par basculement de ces panneaux de toit 300, 301, 302 vers l'arrière du véhicule, position dans laquelle lesdits panneaux découvrent l'habitacle.

A cela s'ajoute que le véhicule comprend alors en outre un hayon arrière 150 mobile entre une position ouverte (voir figures 1 et 4) dans laquelle il autorise l'accès au coffre 5 et une position fermée dans laquelle il recouvre cet accès, les panneaux de toit comprenant alors, en quelque sorte :
- un premier groupe de panneaux de toit 300, 301, 302 déplaçables entre ladite position de fermeture (panneaux disposés les uns derrières les autres) et ladite position ouverte dans laquelle ces panneaux du premier groupe 300, 301, 302 sont côte à côte, superposés les uns aux autres et disposés sensiblement verticalement à l'arrière du coffre arrière 5 (figure 4),
- et un second groupe de panneaux de toit comprenant au moins un panneau 151, lié fonctionnellement au hayon 150 et définissant donc un panneau supérieur pour ce hayon, lequel comprend au moins deux parties mobiles l'une par rapport à l'autre, incluant ledit panneau supérieur 151 et un panneau inférieur 152.

Dans ce cas, les deux panneaux supérieur et inférieur de hayon (151, 152) sont donc mobiles avec le hayon entre sa dite position fermée (figure 2) dans laquelle les panneaux 151, 152 sont déployés l'un à la suite de l'autre, dans la continuité des panneaux de toit du premier groupe (300, 301, 302), lorsque ceux-ci sont en position fermée (fermant alors totalement le véhicule au dessus et à l'arrière de l'habitacle), et ladite position ouverte du hayon atteinte par déplacement, vis-à-vis au moins de la structure du véhicule, de l'intégralité de l'un au moins des dits panneaux supérieur et inférieur de hayon 151, 152, en tous points (glissement).

Dans l'exemple illustré, c'est avec la charnière décalée au bout des bras 19a et/ou 19b (axe de rotation 21a, 21b) que l'on obtient ce déplacement intégral, avec donc un mouvement de rotation autour d'au moins un axe situé à distance du panneau considéré, une autre solution ayant pu consister en un déplacement sur glissière (s) arqués (courbes) du (des) panneau(x) considéré(s) avec un décalage approprié entre le coulissement du hayon le long de ces glissières, pour son mouvement d'ouverture comme sur la figure 1, et le mouvement de basculement des panneaux de toit du premier groupe (300, 301, 302), de manière qu'on puisse atteindre le décalage axial (suivant l'axe 23) permettant le positionnement décalé en profondeur de la figure 4, avec les panneaux de toit du premier groupe devant le panneau de hayon 150.

Grâce au principe de coulissement expliqué ci avant les glissières 4, ainsi que du fait du principe de basculement des bras, les panneaux de toit 300, 301, 302 du premier groupe sont donc mobiles par rapport à la structure 9 du véhicule :
- d'une part, au-dessus de l'habitacle, 7, et suivant un chemin sensiblement horizontal, entre leur position de fermeture de la figure 1 ou il s'étend sensiblement dans un même plan, et une position d'ouverture intermédiaire (figure 2) dans laquelle ces panneaux de toit sont côte à côte, superposés les uns aux autres, à l'arrière de l'habitacle,
- et d'autre part, entre cette position d'ouverture intermédiaire et ladite position d'ouverture (pleine) de la figure 4 correspondant à une ouverture maximale du toit, dans laquelle ces panneaux 300, 301, 302 sont donc disposés côte à côte sensiblement verticalement à l'arrière du coffre arrière.

Bien entendu, l'utilisation des bras pivotants 19a, 19b pour le hayon et de préférence 45 pour l'élément du premier groupe de panneaux de toit qui entraîne les autres en basculement favorise la simplicité, l'efficacité et la fiabilité de la solution proposée.

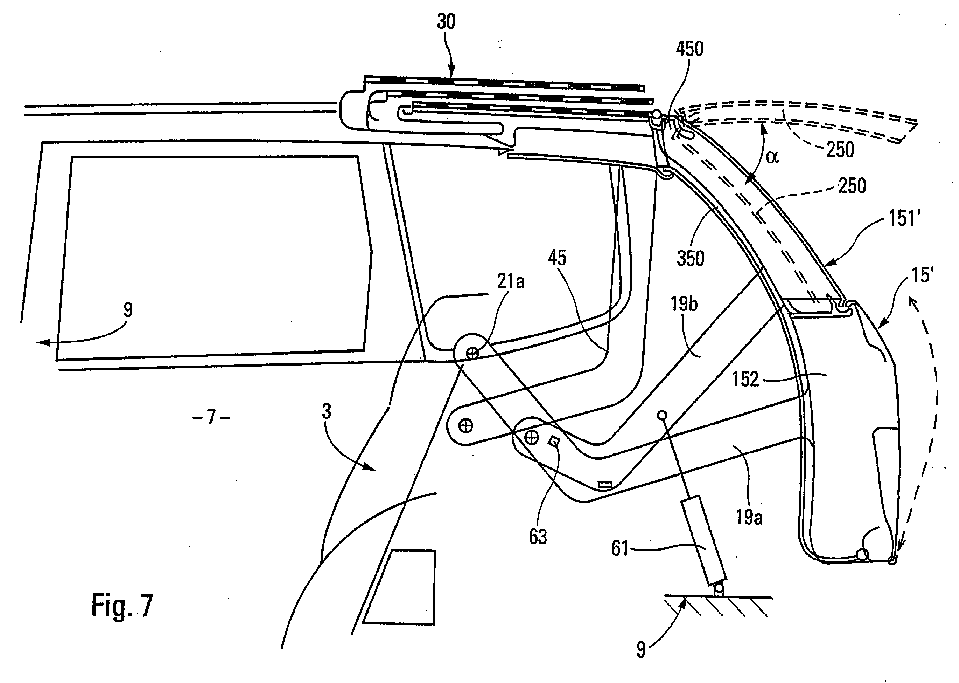

Dans le cas de la figure 7, on trouve un panneau supérieur de hayon (ou élément le plus à l'arrière du toit ouvrant) 151' conçu comme le panneau 151 définit avant, à ceci près que la vitre 250 qu'il présente (ou éventuellement toute cloison transparente ou non) est montée pivotante par rapport au hayon 15' (par ailleurs identique au hayon 15) dans son ensemble et en particulier par rapport à un encadrement périphérique 350 du panneau 151', autour d'un axe de charnière horizontal 450, de manière à pouvoir ouvrir d'un angle α la cloison ou vitre 250, alors que le hayon 15' est basculé vers sa position "fermée" sensiblement verticale.

Bien entendu, ceci n'empêche en rien le mouvement du hayon 15' dans son ensemble vers sa position ouverte de la figure 1, ni l'abaissement de la partie haute 151' au niveau du panneau inférieur 152, comme dans le cas de la figure 4.

A la place des bras 45, un système à glissières (moins approprié) aurait pu être prévu entre les parties 151 (151') et 152.

Il doit être clair que dans la position du hayon de la fig.4, les éléments de toit 300,301,302 peuvent être redressés horizontalement, les mouvements des deux groupes 15, 30 étant indépendants.

## Revendications

1. Véhicule découvrable comprenant une structure (9), un habitacle, un coffre arrière et un toit ouvrant (30) comprenant plusieurs panneaux de toit (300, 301, 302, 151) mobiles les uns par rapport aux autres et par rapport à la structure (9) du véhicule entre une position de fermeture dans laquelle les panneaux de toit (300, 301, 302) s'étendent au dessus de l'habitacle qu'ils ferment en partie supérieure, et une position ouverte atteinte par basculement desdits panneaux de toit vers l'arrière du véhicule et dans laquelle ils découvrent l'habitacle (7),
**caractérisé en ce que** :
- le véhicule comprend en outre un hayon arrière (15,15') monté glissant par rapport à la structure du véhicule entre une position ouverte dans laquelle il libère un accès au coffre arrière (5) du véhicule et une position fermée dans laquelle il recouvre cet accès,
- et les panneaux de toit comprennent:
* un premier groupe de panneaux de toit (300, 301, 302) comprenant plusieurs dits panneaux déplaçables entre ladite position de fermeture dans laquelle ils sont disposés les uns derrières les autres et ladite position ouverte dans laquelle ils sont côte à côte, disposés sensiblement verticalement à l'arrière du coffre arrière (5),
* et un second groupe de panneaux de toit comprenant au moins un panneau (151,151') lié fonctionnellement au hayon (15,15') et définissant un panneau supérieur pour ce hayon, lequel comprend au moins deux parties mobiles l'une par rapport à l'autre, incluant ledit panneau supérieur (151,151') et un panneau inférieur (152), lesdits panneaux supérieur et inférieur de hayon étant mobiles avec ce hayon entre sa dite position fermée dans laquelle lesdits panneaux supérieur et inférieur de hayon (151,151',152) sont déployés l'un à la suite de l'autre, dans la continuité des panneaux de toit du premier groupe (300, 301, 302), lorsque ceux-ci sont en position fermée, en fermant alors totalement le véhicule au dessus et à l'arrière de l'habitacle, et ladite position ouverte du hayon atteinte par glissement de celui-ci vis-à-vis de la structure du véhicule.

2. Véhicule selon la revendication 1 **caractérisé en ce que** le hayon (15,15') est monté glissant sur le véhicule par l'intermédiaire de bras pivotants (19a,19b) s'étendant jusqu'à l'écart (19'a,19'b) des panneaux de hayon, pour s'articuler vis-à-vis de la structure (9) du véhicule et créer au moins une charnière décalée à l'écart desdits panneaux supérieur et inférieur de hayon.

3. Véhicule selon la revendication 1 ou la revendication 2 **caractérisé en ce qu'**en position ouverte du toit ouvrant (30), celui-ci est commandable pour occuper une position de pleine ouverture dans laquelle les panneaux de toit (300, 301, 302) sont disposés côte à côte, sensiblement verticalement à l'arrière du coffre arrière (5), recouverts extérieurement par lesdits panneaux (151, 151', 152) de hayon, lesquels sont commandables pour occuper alors une position dans laquelle ils sont disposés sensiblement verticalement à l'endroit d'une partie inférieure du coffre (5), avec la partie supérieure de hayon (151, 151') abaissée sensiblement au niveau de la partie inférieure (152), à côté des dits panneaux de toit du premier groupe (300, 301, 302), ouvrant ainsi le véhicule au-dessus de l'habitacle et derrière lui.

4. Véhicule selon la revendication 2 ou la revendication 3 rattachée à la revendication 2, **caractérisé en ce que** les panneaux supérieur et inférieur de hayon (151, 151', 152) sont mobiles l'un par rapport à l'autre et à la structure (9) du véhicule autour d'axes horizontaux (21a, 21b), par l'intermédiaire respectivement de premier et second bras pivotants (19b, 19a) qui sont verrouillables entre eux, de manière sélective, pour être déplacés ensemble dans un premier état et pour être déplaçables indépendamment dans un deuxième état.

5. Véhicule selon l'une quelconque des revendications précédentes, **caractérisé en ce que** les panneaux de toit (300, 301, 302) du premier groupe sont montés glissants par rapport à la structure (9) du véhicule :
- d'une part, au-dessus de l'habitacle (7), et sensiblement horizontalement, entre leur position de fermeture où ils s'étendent sensiblement dans la continuité les uns des autres, et une position d'ouverture intermédiaire dans laquelle ces panneaux de toit sont côte à côte, superposés les uns aux autres, à l'arrière de l'habitacle,
- et d'autre part, entre cette position d'ouverture intermédiaire et ladite position d'ouverture, laquelle correspond à une ouverture maximale du toit (40) et où ces panneaux de toit (300, 301, 302) sont donc disposés côte à côte, sensiblement verticalement, à l'arrière du coffre arrière (5).

6. Véhicule selon l'une quelconque des revendications précédentes, **caractérisé en ce que** l'un au moins des panneaux de toit ouvrant du premier groupe (300, 301, 302) est articulé en rotation par rapport à la structure (9) du véhicule, entre ladite position ouverte dans laquelle ces panneaux (300, 301, 302) sont disposés à l'arrière du coffre arrière et une position d'ouverture intermédiaire dans laquelle ces panneaux de toit (300, 301, 302) sont côte à côte, superposés les uns aux autres, à l'arrière de l'habitacle, mais au dessus de lui.

7. Véhicule selon la revendication 6, **caractérisé en ce que** celui des panneaux de toit ouvrant du premier groupe (300, 301, 302) qui est articulé en rotation par rapport à la structure (9) du véhicule est le panneau de toit (302) situé le plus en arrière, en position fermée du toit

8. Véhicule selon les revendications 2 et 4 , **caractérisé en ce que** :
- les bras pivotants (19a,19b,45) du hayon (15,15') et des panneaux du premier groupe (300,301,302) sont sensiblement plats et s'étendent donc chacun sensiblement dans un plan, parallèlement à l'axe longitudinal (23) du véhicule,
- et ces bras sont, de part et d'autre dudit axe longitudinal, regroupés à proximité immédiate les uns des autres.

9. Véhicule selon la revendication 2 ou l'une quelconque des revendications 3 à 7 rattachée à la revendication 2, **caractérisé en ce que** le panneau supérieur et le panneau inférieur du hayon (151,151',152) sont chacun liés aux dits bras pivotants (19a,19b), lesquels bras sont différents pour le panneau supérieur et le panneau inférieur de hayon et seuls les bras d'articulation de la partie supérieure du hayon sont liés à un moyen de déplacement, tel qu'un vérin, pour l'ouverture et la fermeture dudit hayon.

10. Véhicule selon la revendication 3 ou l'une quelconque des revendications 4 à 9 s'y rattachant, **caractérisé en ce qu'**en position sensiblement verticale, basse, basculée vers l'arrière du véhicule, des panneaux de toit ouvrant du premier groupe (300, 301, 302) disposés côte à côte , et alors que le hayon (15,15') est lui-même en position sensiblement verticale basse, avec son panneau supérieur escamoté à l'intérieur de de son dit panneau inférieur (152), une limite haute (L) du hayon est située sensiblement au niveau d'une extrémité supérieure des dits panneaux de toit ouvrant du premier groupe (300, 301, 302).

## Claims

1. Vehicle with a sunroof, comprising a structure (9), a passenger space, a rear boot and an opening roof (30) comprising a plurality of roof panels (300, 301, 302, 151) which are mobile relative to one another and relative to the structure (9) of the vehicle, between a position of closure, in which the roof panels (300, 301, 302) extend above the passenger space which they close in the upper part, and an open position which is obtained by pivoting the said roof panels towards the rear of the vehicle, and in which they lay bare the passenger space (7),
**characterised in that**:
- the vehicle additionally comprises a tail-gate (15, 15') which is fitted such as to slide relative to the structure of the vehicle, between a open position in which it releases access to the rear boot (5) of the vehicle, and a closed position in which it covers this access once more;
- and the roof panels comprise:
* a first group of roof panels (300, 301, 302), comprising a plurality of the said panels which can be displaced between the said position of closure, in which they are disposed behind one another, and the said open position, in which they are side by side, disposed substantially vertically to the rear of the rear boot (5);
* and a second group of roof panels, comprising at least one panel (151, 151') which is connected functionally to the tail-gate (15, 15') and defines an upper panel for this tail-gate, which comprises at least two parts which are mobile relative to one another, including the said upper panel (151, 151') and a lower panel (152), the said upper and lower tail-gate panels being mobile together with this tail-gate, between its said closed position in which the said upper and lower tail-gate panels (151, 151', 152) are deployed one after the other, in the continuity of the roof panels of the first group (300, 301, 302), when the latter are in the closed position, thus closing the vehicle totally above and at the rear of the passenger space, and the said open position of the tail-gate which is obtained by sliding the latter relative to the structure of the vehicle.

2. Vehicle according to claim 1, **characterised in that** the tail-gate (15, 15') is fitted such as to slide on the vehicle by means of pivoting arms (19a, 19b) which extend until apart (19'a, 19'b) from the panels of the tail-gate, in order to be articulated relative to the structure (9) of the vehicle and to create at least one hinge which is offset, spaced from the said upper and lower panels of the tail-gate.

3. Vehicle according to claim 1 or claim 2, **characterised in that**, in the open position of the opening roof (30), the roof can be controlled so as to occupy a full opening position in which the roof panels (300, 301, 302) are disposed side by side, substantially vertically to the rear of the rear boot (5), covered on the exterior by the said panels (151, 151', 152) of the tail-gate, which can be controlled in order then to occupy a position in which they are disposed substantially vertically to the place of a lower part of the boot (5), with the upper part of the tail-gate (151, 151') lowered substantially to the level of the lower part (152), next to the said roof panels of the first group (300, 301, 302), thus opening the vehicle above the passenger space and behind it.

4. Vehicle according to claim 2 or claim 3 associated with claim 2, **characterised in that** the upper and lower panels (151, 151', 152) of the tail-gate are mobile relative to one another and to the structure (9) of the vehicle, around horizontal axes (21a, 21b), by means respectively of first and second pivoting arms (19b, 19a) which can be locked to one another selectively, in order to be displaced together in a first state, and to be displaceable independently in a second state.

5. Vehicle according to any one of the preceding claims, **characterised in that** the roof panels (300, 301, 302) of the first group are fitted such as to slide relative to the structure (9) of the vehicle:
- firstly above the passenger space (7), and substantially horizontally, between their position of closure in which they extend substantially in the continuity of one another, and an intermediate opening position, in which these roof panels are side by side, superimposed on one another, at the rear of the passenger space;
- and secondly between this intermediate opening position and the said opening position, which corresponds to maximum opening of the roof (40), and in which these roof panels (300, 301, 302) are thus disposed side by side, substantially vertically, to the rear of the rear boot (5).

6. Vehicle according to any one of the preceding claims, **characterised in that** at least one of the opening roof panels of the first group (300, 301, 302) is articulated in rotation relative to the structure (9) of the vehicle, between the said open position, in which these panels (300, 301, 302) are disposed to the rear of the rear boot, and an intermediate opening position, in which these roof panels (300, 301, 302) are side by side, superimposed on one another, at the rear of the passenger space, but above it.

7. Vehicle according to claim 6, **characterised in that** the one out of the opening roof panels of the first group (300, 301, 302) which is articulated in rotation relative to the structure (9) of the vehicle, is the roof panel (302) which is situated furthest to the rear, in the closed position of the roof.

8. Vehicle according to claims 2 and 4, **characterised in that**:
- the pivoting arms (19a, 19b, 45) of the tail-gate (15, 15') and of the panels of the first group (300, 301, 302) are substantially flat, and thus each extend substantially on a plane, parallel to the longitudinal axis (23) of the vehicle;
- and, on both sides of the said longitudinal axis, these arms are grouped in the immediate vicinity of one another.

9. Vehicle according to claim 2 or any one of claims 3 to 7 associated with claim 2, **characterised in that** the upper panel and the lower panel of the tail-gate (151, 151', 152) are each connected to the said pivoting arms (19a, 19b), which arms are different for the upper panel and the lower panel of the tail-gate, and only the articulation arms of the upper part of the tail-gate are connected to a displacement means, such as a jack, for opening and closure of the said tail-gate.

10. Vehicle according to claim 3 or any one of claims 4 to 9 associated with the latter, **characterised in that**, in the low, substantially vertical position, pivoted towards the rear of the vehicle, of the opening roof panels of the first group (300, 301, 302) disposed side by side, and thus with the tail-gate (15, 15') itself in the low, substantially vertical position, with its upper panel retracted inside its said lower panel (152), a high limit (L) of the tail-gate is situated substantially at the level of an upper end of the said opening roof panels of the first group (300, 301, 302).

## Patentansprüche

1. Aufdeckbares Fahrzeug mit einer Struktur (9), einer Fahrgastzelle, einem heckseitigen Kofferraum und einem sich öffnenden Dach (30) mit mehreren Dachplatten (300, 301, 302, 151), die in Bezug zueinander und in Bezug zu der Karosserie (9) des Fahrzeugs zwischen einer Schließposition, in welcher die Dachplatten (300, 301, 302) sich über die Fahrgastzelle erstrecken, so dass diese in einem oberen Bereich schließen, und einer Öffnungsposition, die durch Kippen der Dachplatten zur Heckseite des Fahrzeugs erreicht wird, und in welcher diese die Fahrgastzelle (7) offenlegen, beweglich sind,
**dadurch gekennzeichnet, dass**:
- das Fahrzeug ferner eine Heckklappe (15, 15') umfasst, die in Bezug zu der Karosserie des Fahrzeugs zwischen einer Öffnungsposition, in welcher diese einen Zugang auf den heckseitigen Kofferraum (5) des Fahrzeugs freigibt, und einer Schließposition, in welcher diese diesen Zugang verdeckt, gleitend angebracht ist,
- und die Dachplatten umfassen:
* eine erste Gruppe von Dachplatten (300, 301, 302), die mehrere Platten umfassen, die zwischen der Schließposition, in welcher diese hintereinander angeordnet sind, und der Öffnungsposition, in welcher sie seitenweise nebeneinander, im Wesentlichen vertikal an der Heckseite des heckseitigen Kofferraumes (5) angeordnet sind, verschiebbar sind,
* und eine zweite Gruppe von Dachplatten, die wenigstens eine Platte (151, 151') umfassen, die funktionell mit der Heckklappe (15, 15') verbunden ist und eine obere Platte für diese Heckklappe bildet, wobei diese wenigstens zwei zueinander bewegliche Bereiche umfasst, die die obere Platte (151, 151') und eine untere Platte (152) umfassen, wobei die obere und die untere Platte der Heckklappe mit dieser Heckklappe zwischen ihrer Schließposition, in welcher die obere und untere Platte der Heckklappe (151, 151', 152) eine nach der anderen in der Kontinuität der Dachplatten der ersten Gruppe (300, 301, 302) ausgefahren sind, wenn sich diese in der Schließposition befinden, und dabei das Fahrzeug von oben und an der Heckseite der Fahrgastzelle vollständig schließen, und der Öffnungsposition der Heckklappe, die durch Gleiten derselben gegenüber der Karosserie des Fahrzeugs erreicht wird, beweglich sind.

2. Fahrzeug nach Anspruch 1, **dadurch gekennzeichnet, dass** die Heckklappe (15, 15') mithilfe von Schwenkarmen (19a, 19b), die sich bis zu einem Abstand (19'a, 19'b) der Heckklappenplatten erstrecken, auf dem Fahrzeug gleitend angebracht ist, um sich gegenüber der Karosserie (9) des Fahrzeugs zu schwenken und wenigstens ein in Abstand der oberen und unteren Platte der Heckklappe versetztes Scharnier zu erzeugen.

3. Fahrzeug nach Anspruch 1 oder Anspruch 2, **dadurch gekennzeichnet, dass** in Öffnungsposition des sich öffnenden Daches (30) dieses steuerbar ist, um eine Position der vollen Öffnung einzunehmen, in welcher die Dachplatten (300, 301, 302) seitenweise nebeneinander angeordnet sind, im Wesentlichen vertikal an der Heckseite des heckseitigen Kofferraums (5), nach außen durch die Platten (151, 151', 152) der Heckklappe abgedeckt, wobei diese steuerbar sind, um dann eine Position einzunehmen, in welcher sie im Wesentlichen vertikal in der Stelle eines unteren Bereichs des Kofferraums (5) angeordnet sind, wobei der obere Bereich der Heckklappe (151, 151') wesentlich auf das Niveau des unteren Bereichs (152) heruntergedrückt ist, neben die Dachplatten der ersten Gruppe (300, 301, 302), so dass sich das Fahrzeug oberhalb der Fahrgastzelle und hinter derselben öffnet.

4. Fahrzeug nach Anspruch 2 oder Anspruch 3, rückbezogen auf Anspruch 2, **dadurch gekennzeichnet, dass** die obere und untere Platte der Heckklappe (151, 151', 152) in Bezug zueinander und zur Karosserie (9) des Fahrzeugs um horizontale Achsen (21a, 21b) beweglich sind, mittels jeweils einem ersten und einem zweiten Schwenkarm (19b, 19a), die untereinander wahlfrei verriegelbar sind, um in einem ersten Zustand zusammen verschoben werden zu können und um in einem zweiten Zustand unabhängig verschoben werden zu können.

5. Fahrzeug nach einem der vorhergehenden Ansprüche, **dadurch gekennzeichnet, dass** die Dachplatten (300, 301, 302) der ersten Gruppe in Bezug zu der Karosserie (9) des Fahrzeugs gleitend angebracht sind:
- einerseits oberhalb der Fahrgastzelle (7) und im Wesentlichen horizontal zwischen ihrer Schließposition, in welcher sie sich im Wesentlichen in der Kontinuität zueinander erstrecken, und einer Zwischen-Öffnungsposition, in welcher diese Dachplatten seitenweise übereinander an der Heckseite des Fahrzeugs liegen,
- und andererseits zwischen dieser Zwischen-Öffnungsposition und der Öffnungsposition, welcher einer maximalen Öffnung des Daches (40) entspricht und in welcher diese Dachplatten (300, 301, 302) somit seitenweise im Wesentlichen vertikal an der Heckseite des heckseitigen Kofferraums (5) angeordnet sind.

6. Fahrzeug nach einem der vorhergehenden Ansprüche, **dadurch gekennzeichnet, dass** wenigstens eine der Platten der ersten Gruppe (300, 301, 302) des sich öffnenden Daches in Bezug zu der Karosserie (9) des Fahrzeugs drehbar angelenkt ist, zwischen der Öffnungsposition, in welcher diese Platten (300, 301, 302) an der Heckseite des heckseitigen Kofferraums angeordnet sind, und einer Zwischen-Öffnungsposition, in welcher diese Dachplatten (300, 301, 302) seitenweise übereinander an der Heckseite der Fahrgastzelle aber oberhalb derselben angeordnet sind.

7. Fahrzeug nach Anspruch 6, **dadurch gekennzeichnet, dass** diejenige Platten der ersten Gruppe (300, 301, 302) des sich öffnenden Daches, die in Bezug zu der Karosserie (9) des Fahrzeugs drehbar angelenkt ist, die Dachplatte (302) ist, die am weitesten hinten in der Schließposition des Daches liegt.

8. Fahrzeugen nach den Ansprüchen 2 und 4, **dadurch gekennzeichnet, dass**:
- die Schwenkarme (19a, 19b, 45) der Heckklappe (15, 15') und der Platten der ersten Gruppe (300, 301, 302) im Wesentlichen flach sind und sich somit jeweils im Wesentlichen in einer Ebene parallel zur Längsachse (23) des Fahrzeugs erstrecken,
- und diese Arme beiderseits der Längsachse in unmittelbarer Nähe zueinander zusammengeschlossen sind.

9. Fahrzeug nach Anspruch 2 oder einem der Ansprüche 3 bis 7, rückbezogen auf Anspruch 2, **dadurch gekennzeichnet, dass** die obere Platte und die untere Platte der Heckklappe (151, 151', 152) jeweils mit den Schwenkarmen (19a, 19b) verbunden sind, wobei diese Arme für die obere Platte und die untere Platte der Heckklappe unterschiedlich sind und nur die Gelenkarme des oberen Bereichs der Heckklappe mit einer Verstelleinrichtung verbunden sind, wie einem Zylinder, um die Heckklappe zu öffnen und zu schließen.

10. Fahrzeug nach Anspruch 3 oder einem der Ansprüche 4 bis 9, wenn darauf rückbezogen, **dadurch gekennzeichnet, dass** in der im Wesentlichen vertikalen, tief liegenden Position, gekippt zur Heckseite des Fahrzeugs, die Platten der ersten Gruppe (300, 301, 302) des sich öffnenden Daches, die seitenweise angeordnet sind, während sich die Heckklappe (15, 15') selbst mit ihrer oberen Platte zur Innenseite ihrer unteren Platte (152) versenkt in ihrer im Wesentlichen vertikalen tiefen Position befindet, eine obere Grenze (L) der Heckklappe im Wesentlichen auf dem Niveau eines oberen Endes der Platten des sich öffnenden Daches der ersten Gruppe (300, 301, 302) liegt.
